# EUROPÄISCHE PATENTSCHRIFT

(11) **EP 1 548 042 B1**
(45) Veröffentlichungstag und Bekanntmachung des Hinweises auf die Patenterteilung: **15.10.2008**
(21) Anmeldenummer: 04028998.5
(22) Anmeldetag: 07.12.2004
(51) Int. Cl.: C08G 18/10, C08G 18/42, C08G 18/63, C09J 175/04, C08F 283/02

(54) **Hoch elastische Polyurethan Schmelzklebstoffe**
Highly elastic polyurethane hot melt adhesives
Adhésifs thermodurcissables ayant une élasticité élevée

(30) Priorität: 24.12.2003 DE 10361277
(43) Veröffentlichungstag der Anmeldung: 29.06.2005
(73) Patentinhaber: Henkel AG & Co. KGaA, 40589 Düsseldorf (DE)
(72) Erfinder: Krebs, Michael, 40724 Hilden (DE); Franken, Uwe, 41542 Dormagen (DE); Möller, Thomas, 40593 Düsseldorf (DE); Morgeneyer, Thomas, 73441 Bopfingen (DE); Primke, Hartmut, 73441 Bopfingen (DE)

(56) Entgegenhaltungen:
- WO-A-01/46330
- WO-A-91/15530
- DE-A1- 10 231 111
- DATABASE WPI Week 200013 Derwent Publications Ltd., London, GB; AN 2000-142813 XP002417494 & JP 2000 008014 A (HITACHI CHEM CO LTD) 11. Januar 2000 (2000-01-11)

## Beschreibung

Die vorliegende Erfindung betrifft ein Verfahren zur Herstellung eines reaktiven Polyurethan-Schmelzklebstoffes auf der Basis von gepfropften Polyester-Polyether-Blockcopolymeren sowie Schmelzklebstoffe, die nach diesem Verfahren hergestellt worden sind.

Reaktive Polyurethan- Kleb- und -Dichtstoffe auf der Basis von Prepolymeren mit freien Isocyanatgruppen zeichnen sich durch ein sehr hohes Leistungsprofil aus. Daher konnten in den letzten Jahren zunehmend neue Anwendungen für diese Kleb-/Dichtstoffe erschlossen werden. Zusammensetzungen für derartige Klebstoffe und/oder Dichtstoffe sind bereits aus sehr vielen Patentanmeldungen und sonstigen Veröffentlichungen bekannt. Hierzu zählen insbesondere auch reaktive, einkomponentige, feuchtigkeitshärtende Polyurethan-Schmelzklebstoffe.

Diese sind bei Raumtemperatur fest und werden in Form ihrer Schmelze als Klebstoff appliziert, die polymeren Bestandteile der Polyurethan-Schmelzklebstoffe enthalten Urethangruppen sowie reaktionsfähige Isocyanatgruppen. Durch das Abkühlen dieser Schmelze nach dem Auftrag und Fügen der zu verbindenden Substrat-Teile erfolgt zunächst eine rasche physikalische Abbindung des Schmelzklebstoffes durch dessen Erstarren. Daran schließt sich eine chemische Reaktion der noch vorhandenen Isocyanatgruppen mit Feuchtigkeit aus der Umgebung zu einem vernetzten unschmelzbaren Klebstoff an. Reaktive Schmelzklebstoffe auf der Basis von isocyanatterminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Kaschierklebstoffe können entweder ähnlich aufgebaut sein wie die reaktiven Schmelzklebstoffe oder sie werden als einkomponentige Systeme aus der Lösung in organischen Lösungsmitteln appliziert. Eine weitere Ausführungsform besteht aus zweikomponentigen lösungsmittelhaltigen oder lösungsmittelfreien Systemen, bei denen die polymeren Bestandteile der einen Komponente Urethangruppen sowie reaktionsfähige Isocyanatgruppen enthalten und die zweite Komponente Polymere bzw. Oligomere mit Hydroxylgruppen, Aminogruppen, Epoxigruppen und/oder Carboxylgruppen enthält. Bei diesen zweikomponentigen Systemen werden die isocyanatgruppenhaltige Komponente und die zweite Komponente unmittelbar vor der Applikation gemischt, im Normalfall mit Hilfe eines Misch- und Dosiersystems.

Der Hauptvorteil von Schmelzklebern gegenüber anderen Klebstoffsystemen liegt in ihrer Fähigkeit, sehr schnell abzubinden, sowie in dem Fehlen von Wasser und Lösemitteln in ihrer Zusammensetzung.
Entsprechende feuchtigkeitshärtende Polyurethan-Schmelzkleber zum Verkleben diverser Trägermaterialien sind vorbekannt.

So beschreibt DE-A-32 36 313 einen Schmelzkleber, der ein prepolymeres Isocyanat, ein thermoplastisches Polymer sowie ein Kunstharz von niedrigem Molekulargewicht, ausgewählt aus der Gruppe der Ketonharze, Keton-Aldehyd-Kondensationsharze und / oder Hydrierungsprodukten von Acetophenon-Kondensationsharzen, enthält. Bei dem prepolymeren Isocyanat handelt es sich um ein reaktives Polyurethan-Präpolymer eines aromatischen Diisocyanats und/oder ein Präpolymer dieses Diisocyanats mit einem kurzkettigen Diol sowie eines Polyethers oder Polyesters, der neben OH-Gruppen auch ein kurzkettiges Diol enthält.

Gemäß EP-A-248 658 sind Polyurethan-Schmelzkleber aus einem Reaktionsprodukt von Diisocyanaten und kristallinen Polyester-Diolen herstellbar, wobei letztere aus symmetrischen aromatischen Dicarbonsäuren synthetisiert werden und einen Säuregehalt von mindestens 50 Mol-% aufweisen. Bei bevorzugten Ausführungsformen werden dabei die freien Isocyanatgruppen blockiert, z.B. mittels Acetylaceton. Diese Maßnahme verringert die Feuchtigkeitsempfindlichkeit des Schmelzklebers und erhöht damit seine Lagerbeständigkeit, andererseits wird jedoch die Abbindegeschwindigkeit wesentlich erniedrigt, da die Isocyanat-Gruppe mit Blick auf die Anwendungstemperatur zunächst mittels eines Entblockierungsschritts wieder in ihre reaktive Form überführt werden muss.

EP 0293602 B1 beschreibt kompatible Mischungen zur Bildung von reaktiven Schmelzklebstoffen auf Basis von Polyurethanen enthaltend ein Reaktionsprodukt eines Polyalkylenpolyols und eines Isocyanates sowie thermoplastische Polymere mit reduzierter Polarität. Konkret genannt werden Polymere aus Ethylen-Vinylmonomeren, die einen Vinylmonomergehalt von etwa 1 bis 45 Mol% haben, Polyolefinpolymere, radiale AB-A-Blockcopolymere, A-(B-A)ₙ-B-Blockcopolymere oder A-B-A-Blockcopolymere in Kombination mit verträglichen, klebrigmachenden Harzen. Es wird ausgeführt, dass diese Klebstoffe gute Hitzestabilität, gute Anfangshaftfestigkeit, gute Lagerstabilität und eine gute Durchhärtung haben.

US 47775719 beschreibt eine thermisch stabile, feuchtigkeitshärtende Schmelzklebstoff-Zusammensetzungen mit einer niedrigen Viskosität, einer sehr hohen Anfangsfestigkeit und Endfestigkeit. Diese Zusammensetzung soll ein flüssiges Polyurethan-Prepolymer, ein aromatisches oder aliphatisch-aromatisches klebrigmachendes Harz sowie eine polymere Polyethylen-Vinylmonomere enthaltende Komponente aufweisen, die einen Ethylenanteil von bis zu 55 Gew. % haben soll.

US-A-3931077 beschreibt eine Klebstoff-Zusammensetzung enthaltend ein reaktives Polyurethan-Prepolymer, ein thermoplastisches Harz auf der Basis von Ethylen-Vinylacetatcopolymeren, Ethylen-Acrylsäurecopolymeren, Ethylen-Acrylatcopolymeren, ataktischen Polypropylenen oder linearen Polyethylenterephthalat-Polymeren sowie ein klebrigmachendes Harz aus der Gruppe der Abietinsäureharze (Kolophoniumharze), deren aktiver Wasserstoff oder Doppelbindungen ganz oder teilweise durch Veresterung entfernt wurde sowie Terpen-Phenolcopolymere.

DE-A-2014170 beschreibt thermoplastische Polyurethane, die als Schmelzklebstoffe verwendet werden können. Diese Zusammensetzungen sind Reaktionsprodukte eines Isocyanatgruppen-haltigen Prepolymers mit einem OH-Gruppen terminierten Polyester,
wobei der OH-terminierte Polyester im Überschuss eingesetzt werden soll. Demzufolge kann ein derartiger Schmelzklebstoff nicht mehr mit Feuchtigkeit unter Vernetzung aushärten.

WO 91/15530 beschreibt eine Urethanschmelzklebstoff-Zusammensetzung aus einem nicht reaktiven Polyester-Polyethercopolymer und einem Polyisocyanatprepolymer aus einem Polyol und einem polyfunktionellen Isocyanat mit einer Isocyanat-Funktionalität von 2 oder mehr. In dem Polyester-Polyether-Copolymer soll der Säurebaustein überwiegend eine cyclische Carbonsäure sein. Dieser Schmelzklebstoff soll die Charakteristiken eines thermoplastischen Schmelzklebstoffes und eines reaktiven Klebstoffes haben, Flexibilität aufweisen und sowohl für klebende als auch abdichtende Funktionen eingesetzt werden können. Nachteilig ist bei derartigen Zusammensetzungen, dass sie einen sehr hohen Erweichungspunkt aufweisen und somit eine sehr hohe Aufschmelztemperatur zum Verflüssigen des Klebstoffes erfordern.

WO01/96436 beschreibt Zusammensetzungen enthaltend Umsetzungsprodukte eines Polyisocyanats mit einem Polyester-Block-Copolymer und ein Verfahren zu deren Herstellung. Dabei soll der Carboxyl-terminierte Polyesterblock aus aliphatischen Dicarbonsäuren, ausgewählt aus Adipinsäure, Pimelinsäure, Korksäure, Azelainsäure, Sebacinsäure, Undecandisäure, Dodecandisäure, oder deren Mischungen und difunktionellen Alkoholen ausgewählt aus Butandiol, Hexandiol, Octandiol, Decandiol, Dodecandiol oder deren Mischungen aufgebaut sein und mindestens ein Block durch (-(CH₂)₄-O-(CH₂)₄-)ₒ, (-C₃H₆-O-C₃H₆-)ₒ , (-C₂H₄-O-C₂H₄-)ₚ, den Rest eines Polybutadiens, Polycarbonates oder eines Polycaprolactons oder deren Kombination gebildet werden. Diese Zusammensetzungen eignen sich als feuchtigkeitshärtender Schmelzklebstoff. Gegebenenfalls kann die Schmelzklebstoffzusammensetzung noch ein Umsetzungsprodukt eines Polyisocyanats mit einem Polyesterpolyol und/oder ein Umsetzungsprodukt eines Polyisocyanats mit einem Polyetherpolyol enthalten. Derartige Polyurethan-Schmelzklebstoff-Zusammensetzungen sollen gute Kriechbeständigkeits- und Grenzflächen-Haftungswerte auf Kunststoffen aufweisen und sehr hohe Festigkeitswerte zeigen.

WO01/4633 beschreibt Zusammensetzungen enthaltend Umsetzungsprodukte eines Polyisocyanats mit einem Polyester-Polyether-Copolymer und ein Verfahren zu deren Herstellung. Das Polyester-Polyether-Copolymer soll dabei aus dem Block eines Carboxyl-terminierten Polyesters und dem Block eines Poly(oxytetramethylen)glycols, Poly(oxypropylen)glycols, Poly(oxyethylen)glycols oder deren Copolymeren aufgebaut sein. Der Carboxyl-terminierte Polyesterblock wird gemäß der Lehre dieser Schrift aus aliphatischen oder aromatischen Dicarbonsäuren, ausgewählt aus Adipinsäure, Pimelinsäure, Korksäure, Azelainsäure, Sebacinsäure, Undecandisäure, Dodecandisäure, Phthalsäure, Terephthalsäure, Isophthalsäure oder deren Mischungen und difunktionellen Alkoholen ausgewählt aus Ethylenglycol, Propylenglycol, Butandiol, Diethylenglycol, Triethylenglycol, Dipropylenglycol, Tripropylenglycol, Hexandiol, Octandiol, Decandiol, Dodecandiol oder deren Mischungen aufgebaut. Diese Zusammensetzungen sollen sich als feuchtigkeitshärtende Schmelzklebstoffe eignen, die gute Kriechbeständigkeits- und Grenzflächen-Haftungswerte auf Kunststoffen zeigen und sehr hohe Festigkeitswerte aufweisen.

Die noch unveröffentlichte DE 10235090.6 beschreibt segmentierte Polyurethan-Schmelzklebstoffzusammensetzungen, die ein Umsetzungsprodukt eines hydroxyfunktionellen Polyester-Polyether-Blockcopolymeren auf der Basis aromatischer Dicarbonsäuren mit einem stöchiometrischen Überschuss eines Polyisocyanates sowie einem Umsetzungsprodukt eines Polyisocyanates mit einem Polyesterpolyol und/oder ggf. einem Umsetzungsprodukt eines Polyisocyanates mit einem Polyetherpolyol. Ggf. können diese Zusammensetzungen auch noch nicht isocyanatreaktive thermoplastische Polymere enthalten. Dazu wird in dieser Schrift vorgeschlagen, diese hydroxyfunktionellen Polyester-Polyether-Blockcopolymeren aus aromatischen Dicarbonsäuren und kurzkettigen Alkandiolen sowie ggf. kurzkettigen Polyetherpolyol-Bausteinen und langkettigen Polyetherpolyol-Bausteinen im entsprechenden stöchiometrischen Verhältnis aufzubauen. Eine derartige Vorgehensweise erlaubt zwar eine gezielte Herstellung von derartigen hydroxyfunktionellen Polyester-Polyether-Blockcopolymeren, bedeutet jedoch einen erheblichen verfahrenstechnischen Aufwand.

Angesichts dieses Standes der Technik haben sich die Erfinder die Aufgabe gestellt ein einfacheres Verfahren zur Herstellung von reaktiven Schmelzklebstoffen bereitzustellen, wobei die Polyester-Polyether-Blöcke beim Aushärten des reaktiven Schmelzklebstoffes mit dem übrigen reaktiven Bestandteilen reagieren können, so dass sie voll in die Klebstoffmatrix eingebunden werden.

Die erfindungsgemäße Lösung der Aufgabe ist den Ansprüchen zu entnehmen. Sie besteht im Wesentlichen in einem Verfahren zur Herstellung eines reaktiven Schmelzklebstoffes, das die folgenden wesentlichen Verfahrensschritte beinhaltet:
a) ausgehend von einem im Wesentlichen nicht funktionellen Polyester-Polyether-Blockcopolymeren werden in einer ersten Stufe hydroxylgruppenhaltige Pfropfungsagentien auf das Blockcopolymer aufgepfropft,
b) dieses Reaktionsprodukt wird mit einem stöchiometrischen Überschuss eines Polyisocyanates umgesetzt und kann anschließend in feuchtigkeitsdichte Behälter abgefüllt werden.

In einer bevorzugten Ausführungsform werden dem Reaktionsprodukt aus Schritt a) vor dessen Umsetzung mit dem stöchiometrischen Überschuss eines Diisocyanates weitere Polyetherpolyole, weitere Polyesterpolyole und/oder ggf. hydroxyfunktionelle Klebrigmacher zugesetzt und diese Mischung aus hydroxyfunktionellen Bestandteilen wird einem stöchiometrischen Überschuss an Polyisocyanaten umgesetzt, so dass eine Mischung aus isocyanatfunktionellen Prepolymeren entsteht.

In einer weiteren bevorzugten Ausführungsform können der Mischung aus hydroxyfunktionellen Bestandteilen noch nicht isocyanatreaktive Hilfs- und Zusatzmittel zugemischt werden. Diese Zumischung kann ggf. auch nach der Umsetzung der isocyanatreaktiven Bestandteile mit dem Polyisocyanat erfolgen.

Ein weiterer Gegenstand der vorliegenden Erfindung ist die Verwendung derartiger Zusammensetzungen zum Verkleben von flächigen Laminierungen, z.B. Küchenarbeitsplatten in der Möbelindustrie, Caravanseitenteilen und Paneele in der Bauindustrie, insbesondere eignen sich diese Klebstoff-Zusammensetzungen für Anwendungen, bei denen der Klebstoff großflächig aufgetragen werden muss.

Die aromatischen Dicarbonsäuren des zur Pfropfung geeigneten Polyester-ether -Block-Copolymers können dabei ausgewählt werden aus Terephthalsäure, Isophthalsäure, Phthalsäure, Dibenzoesäure, Bis(p-carboxyphenyl)methan, p-Oxy(p-carboxyphenyl)-benzoesäure, Ethylen-bis(p-oxybenzoesäure), Ethylen-bis(p-benzoesäure), Tetramethylen-bis(p-oxybenzoesäure), 1,5-Naphthalindicarbonsäure, 2,6-Naphthalindicarbonsäure, 2,7-Naphthalindicarbonsäure, Phenanthrendicarbonsäure, Anthracendicarbonsäure, 4,4'-Sulfonyldibenzoesäure, Indendicarbonsäure, sowie deren Kern-substituierte Derivative wie C₁-C₁₀- Alkyl, Halogen-, Alkoxy- oder Aryl- Derivate, p-(β-hydroxyethoxy)benzoesäure oder deren Mischungen, wobei der Anteil an Terephthalsäure vorzugsweise mindestens 75 Gew.% der Dicarbonsäuremischung ausmacht. Gegebenenfalls können anteilig aliphatische oder cycloaliphatische Dicarbonsäuren zur Herstellung des Polyester-ether- Block- Copolymers mitverwendet werden.

Als kurzkettige Diolkomponente des Polyester-ether -Block-Copolymers werden dabei C₂-bis C₁₂- Alkandiole, vorzugsweise Ethylenglycol, Propylenglycol, Butandiol, Hexandiol, Octandiol oder deren Mischungen verwendet.

Als Polyetherbaustein für das Block- Copolymer werden Polypropylenglycol, Polyethylenglycol, Copolymer aus Ethylenoxid und Propylenoxid, Poly(oxytetramethylen)glycol (Poly-THF), 1,2-Polybutylenglycol, oder deren Mischungen verwendet. Bevorzugte Molekulargewichtsbereiche für die Polyetherol- Bausteine liegen zwischen von 400 und 20000, vorzugsweise im Bereich von 1000 bis 6000.

Die vorstehend beschriebenen, zur Pfropfung geeigneten, im Wesentlichen nicht funktionellen Polyester-Polyether-Blockcopolymeren werden bereits seit geraumer Zeit großtechnisch hergestellt und sind daher besonders leicht verfügbar, sie werden beispielsweise von der Firma DuPont unter dem Handelsnamen "Hytrel" angeboten.

Die Pfropfung (auch als "grafting" bezeichnet) der nicht reaktiven Polyester-Polyether-Blockcopolymeren kann dabei in an sich bekannter Weise entweder in geeigneten beheizbaren Rührkesseln oder ganz besonders bevorzugt in Extrudern durchgeführt werden. Dazu wird das Blockcopolymer in einen Doppelschneckenextruder eingetragen und bei Temperaturen zwischen 130°C und 250°C, vorzugsweise zwischen 130°C und 200°C, wird ein hydroxyfunktionelles Pfropfungsagens hinzugefügt, die Verweilzeit der Reaktanden im Extruder beträgt in der Regel zwischen 1 min und 3 min.

Als Pfropfungsagens eigenen sich dabei Allylalkohol, Hydroxyethyl(meth)acrylat, Hydroxypropyl(meth)acrylat, mercaptofunktionelle Alkohole wie z.B. Mercaptoethanol, Mercaptopropanol, Mercaptobutanol, Zimtalkohol, 1-Buten-3,4-Diol, 3-Buten-1-ol, 2-Buten-1,4-Diol, 2,5-Dimethyl-2,5-Bis(tert-Butylperoxy)-Hexyn-3 oder Bis-Hydroxyalkyldisulfide wie z.B. Bis-(hydroxyethyl)-disulfid, Bis-(hydroxypropyl)-disulfid. Der Anteil an einzusetzendem Pfropfungsagens richtet sich nach der gewünschten Hydroxylzahl des gepfropften Polyester-Polyether-Blockcopolymers und dem Molekulargewicht des Pfropfungsagens, typischerweise werden 0,5 bis 15 Gew.-%, vorzugsweise 1 bis 10 Gew.-% Pfropfungsagens bezogen auf eingesetztes Blockcopolymer verwendet. Bei derartigen Mengen an Pfropfungsagens werden Hydroxylzahlen zwischen etwa 1,5 und 10 mg KOH erzielt.

Die weiteren ggf. mitverwendeten Polyole können dabei aus einer Vielzahl von höhermolekularen Polyhydroxyverbindungen ausgewählt werden. Als Polyole eignen sich vorzugsweise die bei Raumtemperatur flüssigen, glasartig fest/amorphen oder kristallinen Polyhydroxyverbindungen mit zwei bzw. drei Hydroxylgruppen pro Molekül im Molekulargewichts-Bereich von 400 bis 20000, vorzugsweise im Bereich von 1000 bis 6000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglycole (Poly(oxytetramethylen)glycol, Poly-THF), die z.B. durch die saure Polymerisation von Tetrahydrofuran hergestellt werden, dabei liegt der Molekulargewichts-Bereich der Polytetramethylenglycole zwischen 600 und 6000, vorzugsweise im Bereich von 800 bis 5000.
Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-dodecandiol, Dimerfettalkohol, Glycerin, Trimethylolpropan oder deren Mischungen hergestellt werden können.
Eine weitere Gruppe der erfindungsgemäß einzusetzenden Polyole sind die Polyester auf der Basis von ε-Caprolacton, auch "Polycaprolactone" genannt.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole ebenso eingesetzt werden wie deren hydrierte Analoga.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit Hydroxy-funktionellen Acrylsäure- und/oder Methacrylsäure-Verbindungen wie Hydroxyethyl(meth)acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Als Polyisocyanate können prinzipiell eine Vielzahl von aliphatischen, cycloaliphatischen oder aromatischen Polyisocyanaten eingesetzt werden.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-Isocyanato-1,5,5-Trimethyl-cyclohexan (Isophoron-Dilsocyanat, IPDI), Cyclohexan-1,4-Diisocyanat, hydriertes Xylylen-Diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Polyisocyanate sind Tetramethoxybutan-1,4-diisocyanat, Butan-1,4-diisocyanat, Hexan-1,6-Diisocyanat (HDI), 1,6-Diisocyanato-2,2,4-Trimethylhexan, 1,6-Diisocyanato-2,4,4-Trimethylhexan sowie 1,12-Dodecandiisocyanat (C₁₂DI), ganz besonders bevorzugt sind dabei Diphenylmethan-4,4-Diisocyanat, oder Diphenylmethan-2,4'-Diisocyanat oder deren höhermolekularen Addukte an Diole mit Molekulargewichten unter 1000 gemäß der Lehre der WO01/40342 oder der DE- 10150722.4.

Zusätzlich können bei der Herstellung der erfindungsgemäßen reaktiven Schmelzklebstoffe nicht reaktive thermoplastische Polymere mit verwendetet werden. Hierzu zählen thermoplastische Polyurethane, thermoplastische Polyester Block- Copolymere, thermoplastische Polyetheramide oder niedermolekulare Polymere von ethylenisch ungesättigten Monomeren. Konkrete Beispiele hierfür sind (Co)polymere aus einem oder mehreren der folgenden Monomeren: C₁-C₁₈-Alkylester der Acrylsäure oder Methacrylsäure, Acrylsäure, Methacrylsäure, Ethylen, Vinylacetat, Vinylpropionat, Vinylversatat, Vinylether, Alkylfumarate, Alkylmaleate, Styrol, Alkylstyrol, Acrylnitritil und / oder Butadien oder Isopren sowie Hydrierungsprodukte der letztgenannten Dien-Copolymeren, wie z.B. Styrol- Ethylen- Propylen- oder Styrol- Ethylen- Butylen- Di- oder Tri-blockcopolymere. Üblicherweise haben diese Thermoplasten ein relativ niedriges Molekulargewicht. Niedriges Molekulargewicht bedeutet in diesem Zusammenhang ein durchschnittliches Molekulargewicht unterhalb von 60 000, vorzugsweise liegt das Molekulargewicht derartiger thermoplastischer Polymeren zwischen 10 000 und 40 000. "Nicht reaktiv" im Sinne dieser Erfindung sind dabei alle solche Thermoplasten, die praktisch keinen Zerewitinoff-aktiven Wasserstoff enthalten.

Weiterhin können die erfindungsgemäßen Schmelzklebstoff-Zusammensetzungen noch klebrigmachende Harze, wie z.B. Abietinsäure, Abietinsäureester, Terpenharze, Terpenphenolharze, Poly-α-methylstyrol oder aliphatische, aromatische oder aromatischaliphatische Kohlenwasserstoffharze oder Coumaron-Inden-Harze enthalten. Gegebenenfalls können diese klebrigmachenden Harze aktive Wasserstoffatome enthalten, so dass diese bei der Umsetzung mit den Di- oder Polyisocyanaten mit in die Bindemittelmatrix des Schmelzklebstoffes eingebaut werden. Konkrete Beispiele hierfür sind hydroxyfunktionelle Ester der Abietinsäure oder auch hydroxylierte Terpenphenolharze. Weiterhin können die Schmelzklebstoff-Zusammensetzungen noch Füllstoffe (z.B. Silikate, Talk, Calciumcarbonate, Tone oder Ruß), oder Thixotropiermittel (z.B. Bentone, pyrogene Kieselsäuren, Harnstoffderivate, fibrillierte oder Pulp-Kurzfasern), Farbpasten bzw. Pigmente oder Leitfähigkeitsadditive wie Leitfähigkeitsruße oder Lithiumperchlorat enthalten.

Ggf. können die erfindungsgemäßen Schmelzklebstoff-Zusammensetzungen noch Weichmacher enthalten, vorausgesetzt, dass diese Weichmacher nicht die Funktionen der übrigen. Bestandteile beeinträchtigen. Beispielhaft erwähnt seien die flüssigen Phthalatweichmacher, Weichmacher auf Basis aromatischer Ester wie z.B. Ester der Benzoesäure oder auch feste Weichmacher wie die Dicyclohexylphthalat, Cyclohexandimethanoldibenzoat und dergleichen. Weiterhin können die erfindungsgemäßen Zusammensetzungen noch Katalysatoren, Stabilisatoren, Antioxidantien, UV-Absorptionsmittel, Wachse oder Haftvermittler (z.B. auf der Basis organofunktioneller Silane) oder migrationsfähige, haftungsverstärkende Polyisocyanate gemäß der Lehre der WO 01/40342 und andere konventionelle Hilfsmittel- und Zusatzstoffe enthalten.

Die Auswahl der einzelnen Komponenten der Klebstoff-Zusammensetzung richtet sich dabei in erster Linie nach den geplanten Anwendungsfeldern für diese Klebstoffe. Zur Erzielung der hochelastischen Eigenschaften des ausgehärteten Schmelzklebstoffes sollte dieser Hartsegmente und Weichsegmente aufweisen. Das Hartsegment wird dabei in erster Linie durch die Polyester-Gruppierung des gepfropften Polyester-Polyether-Blockcopolymeren gebildet. Aus diesem Grunde sollte ein geeignetes Blockcopolymer vorzugsweise einen hohen Anteil an Terephthalsäure im Carbonsäuregemisch des zur Pfropfung verwendeten Polyether-Polyester-Blockcopolymeren aufweisen, bevorzugt sind hier mindestens 75 Gew.-% des gesamten Carbonsäuregemisches. Das "Weichsegment" des zur Pfropfung verwendeten Polyester-Polyether-Blockcopolymeren sollte vorzugsweise aus Poly-THF, hydroxyfunktionellem Polybutadien bzw. hydriertem hydroxyfunktionellen Polybutadien oder auch aus Polypropylenglycolen bestehen. Die weiteren ggf. mit verwendeten Polyolkomponenten können dabei die vorgenannten Polyetherpolyole oder Polyesterpolyole sein.

Dabei können die einzelnen OH-funktionellen Komponenten separat mit dem Polyisocyanat umgesetzt werden und diese Umsetzungsprodukte anschließend, ggf. unter Zusatz der nicht reaktiven Hilfs- und Zusatzstoffe, gemischt werden. In einer weitere Ausführungsform wird sequentiell vorgegangen: eine Polyolkomponente wird mit dem gesamten Polyisocyanat oder einer großen Teilmenge vorgelegt und umgesetzt. Unmittelbar anschließend werden die weiteren Polyolkomponenten hinzugefügt, ggf. unter Zusatz eines weiteren Aliquots des Polyisocyanates. Im einfachsten Fall werden alle Polyolkomponenten gemischt und gemeinsam mit dem Polyisocyanat umgesetzt.

Gegenüber dem bekannten Stand der Technik weist das erfindungsgemäße Herstellverfahren für Schmelzklebstoff-Zusammensetzungen die folgenden Vorteile auf:

Die verwendeten hydroxyfunktionellen - Polyester-Polyether-Blockcopolymere können in einfacher Weise durch Pfropfungsreaktion aus kommerziell leicht erhältlichen, nicht funktionellen Polyester-Polyether-Blockcopolymeren hergestellt werden.

Aufgrund der reaktiven Isocyanatgruppen wird das Polyester-Polyether-Blockcopolymer-Umsetzungsprodukt fest in die Klebstoffmatrix eingebaut, dies führt zu einer höheren Wärmestandfähigkeit und besseren Hydrolysebeständigkeit und besseren Verträglichkeit der erfindungsgemäßen Schmelzklebstoff-Zusammensetzungen. Außerdem ist der Polyester-Polyetherblock migrationsfest und extraktionsbeständig in die Matrix eingebaut. Aus diesem Gründe eignen sich die erfindungsgemäß hergestellten Schmelzklebstoff-Zusammensetzungen auch zur Herstellung von geschäumten Dichtungen, die im ausgehärteten Zustand eine hohe Elastizität und Rückstellfähigkeit aufweisen und keine wesentlichen Abteile an leicht extrahierbaren Thermoplasten enthalten. Letzteres wird aber bei den Systemen auf der Basis von nicht funktionellen Styrol- /Butadien- bzw.

Isopren- Triblock- Copolymeren und reaktiven Polyurethanen des Standes der Technik beobachtet.

Bevorzugte erfindungsgemäße Schmelzklebstoff-Zusammensetzungen enthalten die folgenden Bestandteile:
1. 5 bis 50 Gew.%, vorzugsweise 5 bis 30 Gew.%, besonders bevorzugt 10 bis 20 Gew.% des Umsetzungsproduktes aus einem Polyisocyanat und dem gepfropften Polyester-Polyether-Blockcopolymeren (Komponente aus Verfahrensschritt a)),
2. 5 bis 60 Gew.%, vorzugsweise 10 bis 40 Gew. % des Umsetzungsproduktes eines Polyisocyanates mit einem Polyester-Polyol und / oder einem Polyether-Polyol, wobei dieses Umsetzungsprodukt auch aus Mischungen von Polyester-Polyolen und Polyether-Polyolen und Polyisocyanaten hergestellt werden kann,
3. 0 bis 30 Gew.%, vorzugsweise 5 bis 15 Gew.% eines thermoplastischen Polymers (vorzugsweise nicht Isocyanat-reaktiv),
4. 0 bis 60 Gew.%, vorzugsweise 5 bis 40 Gew.% eines klebrigmachenden Harzes sowie
5. ggf. weitere Hilfs- und Zusatzstoffe ausgewählt aus der Gruppe der Füllstoffe, Thixotropiermittel, Farbpigmente, Leitfähigkeitsadditive, Stabilisatoren und Alterungsschutzmittel sowie haftvermittelnde Zusätze,
wobei die Summe sämtlicher Zusammensetzungsbestandteile 100 Gew.-% ergibt.

Die erfindungsgemäßen Schmelzklebstoff-Zusammensetzungen eignen sich insbesondere zur Verklebung von flächigen Laminierungen, z.B. Küchenarbeitsplatten in der Möbelindustrie, Caravanseitenteilen und Paneele in der Bauindustrie sowie zur Herstellung von geschäumten Dichtungen, wobei das Treibmittel entweder das aus der Isocyanat / Wasserreaktion gebildete Kohlendioxid sein kann, oder es wird in bekannter Weise vor der Extrusion der härtbaren Zusammensetzung ein inertes Gas wie Stickstoff oder Kohlendioxid in die Schmelzklebstoff-Zusammensetzung eingemischt.

Die nachfolgenden Beispiele sollen die Erfindung näher erläutern, wobei die Auswahl der Beispiele keine Beschränkung des Umfanges des Erfindungsgegenstandes darstellt. Bei den Zusammensetzungen sind dabei alle Mengenangaben Gewichtsteile, wenn nicht anders angegeben.

### Beispiele

In einem Technikums-Doppelwellenextruder wurde bei 200°C Hytrel 3078, ein Polyester-Polyether-Blockcopolymer auf der Basis von Terephthalsäure, 1,4-Butandiol und Polytetramethylenglycol der Firma DuPont unter Zusatz von 0,2 Gew.-% Triganox 145 (2,5-Dimethyl-2,5-Bis(tert-Butylperoxy)-Hexyn-3) mit verschiedenen hydroxyfunktionellen Pfropfungsagentien gepfropft.
Die nachfolgende Umsetzung der hydroxyfunktionellen Polymeren mit dem Diisocyanat erfolgte in einem Rührkessel unter wasserfreien Inertbedingungen.

### Beispiel 1

Wie oben angegeben wurden 3,5 Gew.-% Allylalkohol (bezogen auf eingesetztes Blockcopolymer) verwendet. Es resultierte ein gepfropftes Polymer mit einer OH-Zahl von 3,1, Säurezahl < 0,1. Der Restgehalt an Allylalkohol war kleiner als 0,1 % (Nachweisgrenze).

Zum Nachweis des erfolgreichen Einbaus der Hydroxylgruppen in das Pfropfcopolymer wurde Poly-α-methylstyrol (Kristalex F 100, Firma Eastman), Erweichungspunkt 96 bis 104°C nach der Ring and Ball Methode) aufgeschmolzen und es wurden in separaten Versuchen gleiche Teile des gepfropften Copolymers aus Beispiel 1 und im Vergleich ungepfropftes Hytrel 3078 in dem aufgeschmolzenen Kristalex gelöst.
Anschließend erfolgte ein Zusatz von 0,34 Gew.-%, 4,4'-Diphenylmethandiisocyanat (MDI) zu allen zwei Proben. Von allen zwei Proben wurde ein 500 µm dicker Film gezogen und sieben Tage bei Raumtemperatur und Umgebungsbedingungen zur Feuchtigkeitshärtung gelagert. 10 g der ausgehärteten Filme wurden mit 75 g Methylenchlorid versetzt und 16 Stunden auf der Rollbank behandelt. Die Probe der Umsetzungsprodukte aus MDI und den Pfropfcopolymerisaten des Beispiels 1 löste sich nicht in Methylchlorid, sie quoll nur unter Gelbildung auf.

Das Vergleichsbeispiel aus ungepfropften Hytrel 3078, Kristalex F 100 und MDI löste sich vollständig in Methylenchlorid auf. Aus diesen Versuchen geht klar hervor, dass das erfindungsgemäß hergestellte Pfropfcopolymere mit dem MDI unter Vergelung bzw. Vernetzung reagiert hat, während das ungepfropfte Hytrel 3078 keinerlei Vernetzungsreaktion eingegangen war.

### Beispiel 2

### Herstellung eines Prepolymers aus Polyester-Polyol und Polyether-Polyol

Aus einer Mischung im Gewichtsverhältnis 1:2 eines teilkristallinen hydroxyfunktionellen Polyesters auf Basis Adipinsäure und Hexandiol und Poly-THF (Molekulargewicht 2000) mit 4,4'- Diphenylmethandiisocyanat bei einem NCO:OH-Verhältnis von 2,5:1 wurde ein Polyurethanprepolymer mit Ester- und Ethergruppierungen gebildet.

### Beispiel 3

### Herstellung eines Schmelzklebstoffes

Ein Poly-α-methylstyrol (Erweichungspunkt, Ring & Ball 99 °C, Molekulargewicht etwa 1400) wurde in einem Rührkessel auf 190 °C erhitzt, bei dieser Temperatur wurde der gepfropfte Copolyester aus Beispiel 1 mit 4,4'- Diphenylmethandiisocyanat unter Rühren umgesetzt (NCO:OH-Verhältnis von 2,5:1). Das Reaktionsprodukt löste sich in dem Poly-α-Methylstyrol vollständig, anschließend erfolgte unter Rühren bei der gleichen Temperatur die Zugabe eines Ethylen-Vinylacetat-Copolymers (Vinylacetatanteil:50%, Schmelzindex (MFI, ISO 1133): bei 190°C / 21,2N : 3). Nach Erreichen einer vollständig homogenen Mischung wurde das Prepolymer gemäß Beispiel 2 zugegeben.

Ausgehärtete Proben des so hergestellten Schmelzklebstoffes zeigten ausgezeichnete elastische Eigenschaften.

## Patentansprüche

1. Verfahren zur Herstellung eines reaktiven Schmelzklebstoffes **gekennzeichnet durch** die folgenden wesentlichen Verfahrensschritte
a) Pfropfung eines im wesentlichen nicht funktionellen Polyester-Polyether-blockcopolymers mit hydroxylgruppenhaltigen Pfropfungsagentien,
b) Umsetzung des Reaktionsproduktes aus Schritt a) mit einem stöchiometrischen Überschuss eines Polyisocyanates,
c) Abfüllen des Reaktionsproduktes in feuchtigkeitsdichte Behälter.

2. Verfahren nach Anspruch 1, **dadurch gekennzeichnet, dass** dem Reaktionsprodukt aus Schritt a) vor dem Schritt b) Polyetherpolyole, weitere Polyesterpolyole und/oder hydroxyfunktionelle Klebrigmacher zugemischt werden.

3. Verfahren nach Anspruch 1 oder 2 **dadurch gekennzeichnet, dass** dem Reaktionsprodukt aus Schritt a) nicht Isocyanat-reaktive Hilfs- und Zusatzmittel zugemischt werden.

4. Verfahren nach Anspruch 1 bis 3, **dadurch gekennzeichnet, dass** das Polyesterblockcopolymer ausgewählt wird aus Polyester-Ether Blockcopolymeren auf der Basis aromatischer Dicarbonsäuren, Polypropylenglycolen und/oder Polytetramethylenglycolen oder auf der Basis von Polypropylenglycolen und Polytetramethylenglycolen und Kohlensäure.

5. Verfahren nach Anspruch 1 bis 4, **dadurch gekennzeichnet, dass** als Pfropfungsagens Allylalkohol, Hydroxyethyl(meth)acrylat, Hydroxypropyl(meth)acrylat, mercaptofunktionellen Alkoholen, Zimtalkohol, 1-Buten-3,4-diol, 2-Buten-1,4-Diol, 3-Buten-1-ol, 2-Butin-1,4-diol oder Bis-Hydroxyalkyldisulfiden ausgewählt wird.

6. Verfahren nach Anspruch 5, **dadurch gekennzeichnet, dass** das Pfropfungsagens in einer Menge von 0,5 bis 10 Gew.-% vorzugsweise zwischen 1 und 5 Gew.-% bezogen auf das Polyesterether-Blockcopolymer eingesetzt wird.

7. Reaktiver Schmelzklebstoff, hergestellt nach einem Verfahren gemäß Anspruch 1 bis 6.

## Claims

1. A method for making a reactive hot melt adhesive, **characterized by** the following essential process steps of
a) grafting an essentially non-functional polyester-polyether block copolymer with grafting agents containing hydroxyl groups,
b) reacting the reaction product from step a) with a stoichiometric excess of a polyisocyanate,
c) filling the reaction product into moisture-proof containers.

2. The method according to claim 1, **characterized in that** before step b) polyether polyols, further polyester polyols, and/or hydroxyl-functional tackifiers are mixed to the reaction product from step a).

3. The method according to claim 1 or 2, **characterized in that** non-isocyanate-reactive adjuvants and additives are mixed to the reaction product from step a).

4. The method according to claim 1 to 3, **characterized in that** the polyester block copolymer is selected from polyester-ether block copolymers based on aromatic dicarboxylic acids, polypropylene glycols and/or polytetramethylene glycols or based on polypropylene glycols and polytetramethylene glycols and carbonic acid.

5. The method according to claim 1 to 4, **characterized in that** allyl alcohol, hydroxyethyl (meth)acrylate, hydroxypropyl (meth)acrylate, mercapto-functional alcohols, cinnamyl alcohol, 1-butene-3,4-diol, 2-butene-1,4-diol, 3-buten-1-ol, 2-butyne-1,4-diol or bis-hydroxyalkyl disulphides are selected as grafting agents.

6. The method according to claim 5, **characterized in that** the grafting agent is applied in an amount from 0.5 to 10% by weight, preferably between 1 and 5% by weight based on the polyester-ether block copolymer.

7. A reactive hot-melt adhesive, made in accordance with a method according to claims 1 to 6.

## Revendications

1. Procédé pour la préparation d'un adhésif thermofusible réactif, **caractérisé par** les étapes opératoires essentielles suivantes :
a) le greffage d'un copolymère séquencé de polyester-polyéther essentiellement non fonctionnel avec des agents de greffage contenant des groupes hydroxyle;
b) la mise en réaction du produit réactionnel de l'étape a) avec un excès stoechiométrique d'un polyisocyanate;
c) le remplissage de récipients étanches à l'humidité avec le produit réactionnel.

2. Procédé selon la revendication 1, **caractérisé en ce qu'**on ajoute par mélange au produit réactionnel de l'étape a), avant l'étape b), des polyétherpolyols, des polyesterpolyols supplémentaires et/ou des agents rendant adhésif à fonctionnalité hydroxyle.

3. Procédé selon la revendication 1 ou 2, **caractérisé en ce qu'**on ajoute par mélange au produit réactionnel de l'étape a), des adjuvants et des additifs inaptes à réagir avec des isocyanates.

4. Procédé selon l'une quelconque des revendications 1 à 3, **caractérisé en ce que** le copolymère séquencé de polyester est choisi parmi des copolymères séquencés de polyesters-éthers à base d'acides dicarboxyliques aromatiques, de polypropylèneglycols et/ou de polytétraméthylèneglycols, ou à base de polypropylèneglycols et de polytétraméthylèneglycols et d'acide carbonique.

5. Procédé selon l'une quelconque des revendications 1 à 4, **caractérisé en ce qu'**on sélectionne, pour faire office d'agent de greffage, de l'alcool allylique, du méth(acrylate) d'hydroxyéthyle, du méth(acrylate) d'hydroxypropyle, des alcools à fonctionnalité mercapto, de l'alcool cinnamique, du 1-butène-3,4-diol, du 2-butène-1,4-diol, du 3-butén-1-ol, du 2-butyne-1,4-diol ou des bis-hydroxyalkyldisulfures.

6. Procédé selon la revendication 5, **caractérisé en ce qu'**on met en oeuvre l'agent de greffage en une quantité de 0,5 à 10 % en poids, de préférence entre 1 et 5 % en poids, rapportés au copolymère séquencé de polyester-éther.

7. Adhésif thermofusible réactif préparé conformément à un procédé selon les revendications 1 à 6.
